# EUROPÄISCHE PATENTSCHRIFT

(11) **EP 1 190 804 B1**
(45) Veröffentlichungstag und Bekanntmachung des Hinweises auf die Patenterteilung: **31.08.2005**
(21) Anmeldenummer: 01122191.8
(22) Anmeldetag: 17.09.2001
(51) Int. Cl.: B23K 20/10, B29C 65/08

(54) **Verfahren und Vorrichtung zum Ultraschallschweissen von Werkstücken**
Process and device for ultrasonic welding of pieces
Procédé et dispositif de soudage par ultrasons de pièces

(30) Priorität: 18.09.2000 DE 10046451
(43) Veröffentlichungstag der Anmeldung: 27.03.2002
(73) Patentinhaber: Maschinenfabrik Spaichingen GmbH, 78549 Spaichingen (DE)
(72) Erfinder: Distel, Armin, 78647 Trossingen (DE)
(74) Vertreter: Freiherr von Schorlemer, Reinfried

(56) Entgegenhaltungen:
- DE-A- 3 138 520
- DE-A- 3 429 776
- SU-A- 1 315 341
- US-A- 3 784 079
- US-A- 4 341 574
- US-A- 4 746 051

## Beschreibung

Die Erfindung betrifft ein Verfahren nach dem Oberbegriff des Anspruchs 1 und eine Vorrichtung der im Oberbegriff des Anspruchs 3 bezeichneten Gattung (siehe, z.B., GB-A-1 171 498).

Verfahren und Vorrichtungen dieser Art werden insbesondere zur Verbindung von zwei Werkstücken durch Punkt-, Niet-, Zapfen- oder Flächenschweißen benutzt, wobei wenigstens eines der beiden Werkstücke aus einem thermoplastischen Material besteht. Die Werkstücke werden dabei lokal so stark erwärmt, daß sie miteinander verschmelzen. Die Erwärmung der Werkstücke wird dadurch bewirkt, daß eine zu mechanischen Schwingungen angeregte Sonotrode gegen wenigstens eines der Werkstücke gedrückt wird. Bei der Bearbeitung nur eines Werkstückes können diese Schwingungen auch dazu benutzt werden, das Werkstück zu verformen oder zu schneiden. Da die Sonotroden in der Regel mit Ultaschallfrequenzen von z. B. 20 kHz oder 35 kHz schwingen, werden derartige Bearbeitungsvorgänge allgemein als Ultraschallbearbeitungen bezeichnet. Das Haupteinsatzgebiet der beschriebenen Vorrichtungen liegt in der Bearbeitung von Kunststoffteilen, die für Gehäuse von Elektrogeräten und in besonderem Maß in der Automobilindustrie sowohl für Karosserieteile wie Stoßstangen als auch für Innenraumverkleidungen wie Türverkleidungen und Konsolen verwendet werden. Die mit dem Werkstück in Verbindung stehenden Sonotroden sind je nach Art und Material der zu bearbeitenden Werkstücke unterschiedlich gestaltet.

In bekannten Vorrichtungen dieser Art (DE 44 39 470 C1) werden die mechanischen Schwingungen von einem elektromechanischen, in der Regel aus einem piezoelektrischen Kristall bestehenden Konverter erzeugt, der von einem Ultraschallgenerator mit einem elektrischen Wechselstromkreis angeregt wird. Der Konverter schwingt mit einer vorgegebenen Amplitude bei einer entsprechenden Ultraschall-Resonanzfrequenz, wobei typische Werte z. B. 35 kHz für die Frequenz und 7 µm für die Amplitude sind. Das aus Konverter, Sonotrode und ggf. einem zwischengeschalteten Amplitudentransformationsstück bestehende Schwinggebilde ist so eingerichtet, daß es sich bei dieser Resonanzfrequenz ebenfalls in Resonanz befindet und die dem Werkstück zugeordnete Bearbeitungsfläche mit einer Amplitude von z. B. 10 - 40 µm schwingt.

Punkt-, Niet- bzw. Zapfenschweißungen werden in der Regel dadurch ausgeführt, daß die Sonotrode auf vorgewählte Punkte oder auf einen sogenannten Schweiß- oder Nietdom des Werkstücks gedrückt wird, der an einem ersten, auf einem Amboß aufliegenden Werkstück ausgebildet ist, durch ein entsprechendes Loch eines zweiten, mit diesem zu verbindenden Werkstücks ragt und z. B. 10 mm hoch und ggf. hohlzylindrisch ausgebildet ist. Um ein seitliches Weglaufen des bei der Ultraschallbearbeitung weich werdenden Materials des Doms zu vermeiden und eine optisch ansprechende Schweißverbindung zu erhalten, weist die Sonotrode an ihrer auf die Schweiß- oder Nietdome aufzusetzenden Bearbeitungsfläche in der Regel eine konkav gewölbte, ringförmige Erwärmungszone und eine diese ringförmig umgebende Auflagefläche auf, die sich am Ende des Schweißvorgangs auf das betreffende obere Werkstück auflegt und dadurch die Schweißstelle ringförmig umgibt, wobei die Ringform kreisförmig, rechteckig oder sonstwie sein kann.

Maßgeblich für die Qualität einer auf diese Weise durchgeführten Schweißung ist u. a. der Zeitpunkt, zu dem die Zufuhr von Ultraschallenergie zur Sonotrode beendet wird. Dauert die Energiezufuhr zu lange, können sich die ringförmigen Auflageflächen in das jeweils oben liegende Werkstück einbrennen, was aus optischen und qualitativen Gründen unerwünscht ist. Wird die Energiezufuhr dagegen beendet, bevor die Auflageflächen auf der Oberseite des betreffenden Werkstücks aufliegen, ist die Schweißung unter Umständen unvollständig mit der Folge, daß der durch die Verbindung herzustellende Form- bzw. Kraftschluß mangelhaft ist.

Entsprechende Probleme ergeben sich bei anderen Schweißarten, insbesondere Flächenschweißungen mit Hilfe von sogenannten "Euergierichtungsgebern", und anderen Ultraschallbearbeitungen.

Zur Sicherstellung einer ausreichenden Schweißqualität sind bereits zahlreiche Verfahren und Vorrichtungen bekannt geworden, die darauf abzielen, den richtigen Auschaltzeitpunkt für die Energiezufuhr zu finden, aber sämtlich nicht voll befriedigen. Bekannt ist es beispielsweise, eine genau definierte Schweißdauer vorzugeben oder dem Konverter während jedes Bearbeitungszyklus eine genau definierte Energiemenge, ausgedrückt durch das Produkt aus zugeführter Leistung und Bearbeitungsdauer zuzuführen (DE-A 31 38 520). Beide Verfahren arbeiten ungenau, da keine Toleranzen berücksichtigt werden können, die sich z. B. durch unterschiedlich hohe Schweißdome ergeben. Es ist daher auch bereits bekannt (US-A-4 746 051), eine zur Steuerung der Energiezufuhr vorgesehene Schaltungsanordnung so auszubilden, daß sie erkennbar macht, ob die dem Konventer zugeführte Leistung und die Schweißdauer in vorgewählten Toleranzfenstern liegen, und ein Schweißergebnis nur dann als qualitativ einwandfrei betrachtet wird, wenn beide genannten Größen innerhalb der zugeordneten Toleranzfenster liegen. Auch derartige Maßnahmen führen jedoch nicht zu voll befriedigenden Ergebnissen, zumal die richtige Einstellung der Toleranzfenster nicht einfach ist. Derartige Verfahren führen insbesondere nicht immer genau dann zu einem Ausschalten der Zufuhr der Ultraschallenergie, wenn die Auflagefläche der Sonotrode die Oberfläche des betreffenden Werkstücks erreicht. Entsprechende Probleme ergeben sich bei Anwendung von Vorrichtungen, bei denen der von der Sonotrode zurückzulegende Weg auf einen von der jeweiligen Schweißarbeit abhängigen absoluten Wert eingestellt oder mittels elektrischer Sensoren überwacht wird.

Weiterhin ist es bekannt, jeder Sonotrode einen Sensor in Form eines mechanischen Tasters zuzuordnen, der der Sonotrode vorausläuft und nach dem Aufsetzen auf die Oberseite des betreffenden Werkstücks gegen die Kraft einer Feder verschoben wird, bis er am Ende eines definierten Verstellweges mittels eines elektrischen Schalters ein Ausschaltsignal für die Energiezufuhr auslöst. Derartige Vorrichtungen ermöglichen zwar einen definierten Schweißvorgang, einen Toleranzausgleich und damit die Sicherstellung einer hohen Qualität der Schweißverbindung. Nachteilig ist jedoch, daß sie aufwendige manuelle Einstellungen erfordern, unflexibel im Hinblick auf baugleiche, jedoch aus unterschiedlichen Materialien hergestellte Werkstücke sind (z.B. bei der Herstellung von mit unterschiedlichen Materialien bespannten Innenverkleidungen für Pkw-Türen) und vor allem jeder vorhandenen Sonotrode einer Bearbeitungsstation ein eigener Taster zugeordnet werden muß, was bei der gleichzeitigen Bearbeitung einer Vielzahl von eng nebeneinander liegenden Schweißstellen zu erheblichen Platzproblemen führt.

Daneben ist es zu Qualitätskontrolle allgemein bekannt, ständig verschiedene Zustandsgrößen der eingangs bezeichneten Vorrichtung zu überwachen, z. B. die dem Konverter zugeführte Ultraschall-Leistung (DE 34 29 776 C2). Die Herstellung einwandfreier Schweißverbindungen kann allerdings auch mit einer derartigen Qualitätskontrolle nur unzureichend sichergestellt werden.

Bei anderen bekannten, zum Bonden von Halbleiterbauelementen bestimmten Ultraschallbearbeitungsgeräten ist es bekannt (US-A 37 84 079), den Bearbeitungsvorgang dann zu beenden, wenn ein mit dem Halbleiterbauelement zu verbindender Draht weich wird und infolge dessen die dem Konverter zugeführte Leistung bzw. die an diesem anliegende Spannung vorübergehend abnimmt. Dieses Weichwerden wird als Bestätigung dafür interpretiert, daß der Bearbeitungsvorgang erfolgreich beendet und der Draht fest mit dem Halbleiterbauelement verbunden ist. Eine derartige Verfahrensweise läßt sich allerdings auf die oben angegebene Ultraschallbearbeitung nicht analog anwenden, weil bei dieser das Weichwerden bzw. Schmelzen von thermoplastischen Materialien den Bearbeitungsvorgang zwar einleitet, aber kein Maß für ein erfolgreiches Beenden eines Bearbeitungsvorgangs ist.

Der Erfindung liegt daher das technische Problem zugrunde, das Verfahren und die Vorrichtung der eingangs bezeichneten Gattungen dahingehend zu verbessern, daß die Bearbeitungszyklen zu Zeitpunkten beendet werden, die ein einwandfreies Schweißergebnis sicherstellen, der apparative Aufwand reduziert wird und im Sonotrodenbereich kein zusätzlicher Raumbedarf für Sensoren, Taster oder sonstige Hilfsmittel besteht.

Zur Lösung dieser Aufgabe dienen die kennzeichnenden Merkmale der Ansprüche 1 und 3.

Die Erfindung beruht auf der durch langwierige Versuche gewonnenen Erkenntnis, daß sich beim Auflegen der Sonotroden-Auflageflächen auf die Oberseiten der betreffenden Werkstücke verschiedene Parameter bzw. Zustandsgrößen innerhalb des Ultraschall-generators meßbar verändern. Diese Veränderungen werden erfindungsgemäß als Kriterium für die Beendigung des Schweißvorgangs und zur Erzeugung eines die Energiezufuhr beendenden Ausschaltsignals verwendet. Zusätzliche Bauteile im Bereich der Sonotroden, z. B. zum Abschalten bei Erreichen einer vorgewählten Tiefe, sind daher entbehrlich. Außerdem kann die Erfindung bei allen üblicherweise verwendeten Werkstückmaterialien angewendet werden.

Weitere vorteilhafte Merkmale der Erfindung ergeben sich aus den Unteransprüchen.

Die Erfindung wird nachfolgend in Verbindung mit den beiliegenden Zeichnungen an Ausführungsbeispielen näher erläutert. Es zeigen:
Fig. 1 eine erfindungsgemäße Steuer- und Regelschaltung für eine Vorrichtung zur Ultraschallbearbeitung von Werkstücken;
Fig. 2 einen schematischen Querschnitt durch zwei Werkstücke, die durch Ultraschallschweißung mit Hilfe der Vorrichtung nach Fig. 1 verbunden werden sollen;
Fig. 3 einen der Fig. 2 entsprechenden Schnitt nach Durchführung der Schweißung;
Fig. 4 ein Schaubild, das die Abhängigkeit der einem Konverter der Vorrichtung nach Fig. 1 zugeführten Ultraschall-Wirkleistung in Abhängigkeit von der Zeit darstellt;
Fig. 5 einen vergrößerten Schnitt durch die Sonotrode nach Fig. 2 und 3;
Fig. 6 eine Unteransicht der Sonotrode nach Fig. 5; und
Fig. 7 einen schematischen Schnitt durch eine Anordnung mit einer der Fig. 1 analogen Vorrichtung zum Flächenschweißen.

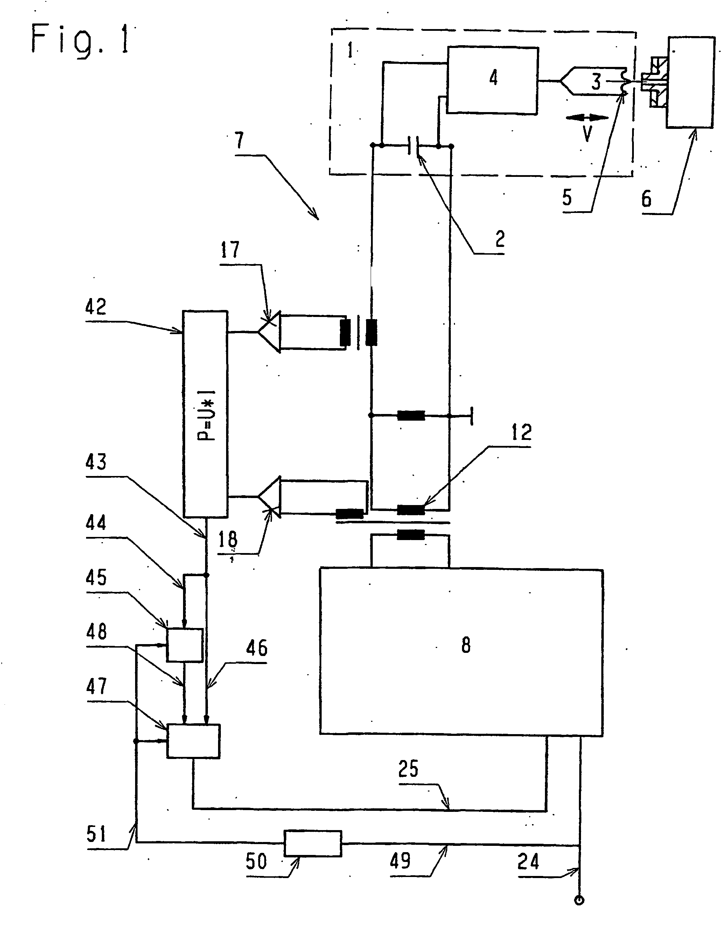

Fig. 1 gibt im wesentlichen die Regel- und Steuerelemente eines allgemeinen Ausführungsbeispiels der Erfindung in einer schematischen Darstellung wieder. Danach besteht ein übliches, insgesamt mit dem Bezugszeichen 1 bezeichnetes Schwinggebilde aus einem elektromechanischen, vorzugsweise piezoelektrischen Konverter 2, einer mechanisch mit diesem verbundenen Sonotrode 3 und ggf. einem zwischengeschaltenen Amplitudentransformationsstück 4, wobei die Sonotrode 3 mit einer Bearbeitungsfläche 5 auf ein Werkstück 6 aufgesetzt werden kann, um in bekannter Weise einen Bearbeitungsvorgang, insbesondere einen Schweißvorgang durchzuführen. Das Schwinggebilde 1 ist zu diesem Zweck mit einer nicht dargestellten Vorschubeinheit gekoppelt und mittels dieser meistens senkrecht zur Werkstückoberfläche in Richtung eines Doppelpfeils v auf- und abbewegbar in einem ebenfalls nicht dargestellten Gestell montiert. Die Sonotrode 3 und ggf. das Amplitudentransformationsstück 4 sind so eingerichtet, daß das Schwinggebilde 1 bei der Resonanzfrequenz des Konverters 2 im wesentlichen mit derselben Frequenz resonant schwingt. Die Bearbeitungsfläche 5 der Sonotrode 3 schwingt dabei mit einer werkseitig festgelegten, mechanischen Schwingungsamplitude von z. b. 7 µm bis 30 µm. Außerdem ist der Abstand der Bearbeitungsfläche 5 vom Konverter 2 so gewählt, daß an ihr immer ein Schwingungsbauch liegt.

Vorrichtungen zur Ultraschallbearbeitung dieser Art sind allgemein bekannt (z. B. DE 34 39 776 C2, DE 42 06 584 C2, DE 44 39 470 C1 und DE 297 13 448 U1) und brauchen daher nicht näher erläutert werden.

Elektrisch ist der piezoelektrische Konverter 2 an einen Wechselstromkreis eines allgemein mit dem Bezugszeichen 7 bezeichneten Ultraschall-Generators angeschlossen. In dem Wechselstromkreis wird ein zur Anregung des Konverters 2 bestimmter Wechselstrom erzeugt, dessen Frequenz der Schwingungsfrequenz des Konverters 2 und der Sonotrode 3 entspricht und dessen Stärke für die mechanische Schwingungsamplitude der Sonotrode 3 im Bereich der Bearbeitungsfläche 5 charakteristisch ist.

Zur Erzeugung des Stroms im Wechselstromkreis dient ein z. B. mit Transistoren bestücktes Leistungsteil des Generators 7, das im Ausführungsbeispiel mit der Primärspule eines Transformators 12 verbunden ist und ein hochfrequentes Signal mit der gewünschten Frequenz abgibt.

Die Sekundärspule des Transformators 12 ist parallel zum Konverter 2, der elektrisch als Kapazität betrachtet werden kann, in den Wechselstromkreis geschaltet, wobei der Transformator 12 im Ausführungsbeispiel so dimensioniert ist, daß seine Sekundärspule eine Wechselspannung von z. B. 600 V_{eff} erzeugt. Der Wechselstromkreis enthält vorzugsweise induktiv gekoppelte Elemente, die z. B. an Ausgängen 17 und 18 je eine elektrische Zustandsgröße liefern. Dazu ist z. B. der Ausgang 17 zur Abgabe eines Signals eingerichtet, das den im Wechselstromkreis fließenden Wirkstrom repräsentiert, während der Ausgang 18 zur Abgabe der an der Sekundärspule liegenden Wechselspannung dient.

Insgesamt ist der Wechselstromkreis mit den Elementen 2 und 12 aus Energiegründen vorzugsweise im wesentlichen als Schwingkreis ausgebildet, der vom Hersteller der Vorrichtung auf die Resonanzfrequenz des Konverters 2 abgestimmt ist und unter Normalbedingungen mit einer Frequenz von ca. 35 kHz arbeitet. Außerdem kann der Wechselstromkreis Bestandteil eines Regelkreises sein, der zusätzlich das Leistungsteil 8 enthält und die vorgewählte Schwingungsamplitude der Sonotrode 3 aufrechterhalten soll. Die Messung des Istwerts der Amplitude kann dabei über die Messung irgendeiner zweckmäßigen Größe im Wechselstromkreis des Generators 7 erfolgen.

Im übrigen wird die Sonotrode 3 immer nur dann in Schwingungen versetzt, wenn tatsächlich ein Bearbeitungszyklus durchgeführt werden soll, d. h. der Wechselstromkreis oder auch der gesamte Regelkreis wird in den Pausen zwischen zwei Bearbeitungszyklen aus- und kurz vor Beginn der nächsten Bearbeitungszyklus wieder eingeschaltet. Hierzu wird z. B. dem Leistungsteil 8 über eine Leitung 24 ein Einschaltsignal und über eine Leitung 25 ein Ausschaltsignal zugeführt. Das bedeutet, daß der Regelkreis nach dem Einschalten zu arbeiten beginnt. Die Einschwingzeit ist dabei mit z. B. 0,5 sec normalerweise so kurz, daß die Sonotrode 3 beim Auftreffen auf das Werkstück 6 die gewünschte Schwingungsamplitude besitzt.

Gemäß einer besonders bevorzugten Ausführungsform ist der Regelkreis durch heute übliche Mikroprozessortechniken realisiert. Alternativ kann der Strom im Wechselstromkreis jedoch auf an sich beliebige, beim Ultraschallschweißen allgemein bekannte Art erzeugt werden.

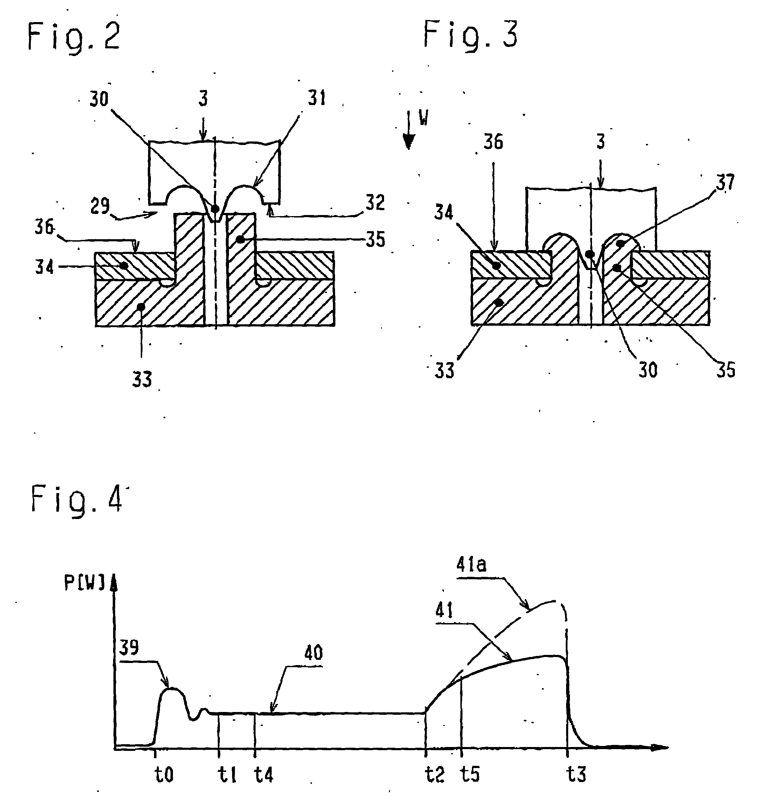

Fig. 2 und 3 zeigen schematisch Einzelheiten der im Ausführungsbeispiel vorgesehenen und für Punkt-, Niet- bzw. Zapfenschweißungen geeigneten Sonotrode 3, die mittels einer nicht dargestellten Vorschubeinheit in Richtung eines Pfeils w bewegbar ist und eine Bearbeitungsfläche 29 aufweist. Im Ausführungsbeispiel ist die Bearbeitungsfläche 29 kreisrund ausgebildet und in ihrem Zentrum mit einem vorstehenden Zapfen 30 versehen. In einer den Zapfen 30 konzentrisch umgebenden Erwärmungszone 31 ist die Bearbeitungsfläche 29 mit einer konkaven Vertiefung versehen, während sie in einem diese und den Zapfen 30 konzentrisch umgebenden, äußeren Bereich eine ringförmige Auflagefläche 32 aufweist, die in Richtung des Pfeils w gegenüber dem Zapfen 30 meistens etwas zurückliegt, aber auch gegenüber dem Zapfen 30 leicht vorstehen könnte.

In Fig. 2 und 3 sind ferner zwei zu verschweißende Werkstücke 33 und 34 dargestellt. Das untere Werkstück 33 liegt bei der Durchführung eines Bearbeitungszyklus unterhalb der Sonotrode 3 z. B. auf einem nicht gezeigten Amboß auf. Es besteht außerdem aus einem thermoplastischen Werkstoff und ist auf einer Oberseite in üblicher Weise mit einem aufragenden, hier hohlzylindrischen Nietdom 35 versehen. Dagegen kann das mit einem Loch in der Größe des Nietdoms 35 versehene Werkstück 34 aus einem an sich beliebigen Werkstoff bestehen. Es wird vor dem Bearbeitungszyklus so auf das Werkstück 33 aufgelegt, daß sein Loch den Nietdom 35 aufnimmt und von diesem durchragt wird. Außerdem besitzt der Nietdom 35 eine derartige Länge, daß er um ein vorgewähltes Maß über das Werkstück 34 vorsteht, wie Fig. 2 zeigt.

Ein Bearbeitungszyklus wird dadurch eingeleitet, daß die Sonotrode 3 mittels der Vorschubeinheit in Richtung des Pfeils w bewegt wird, um ihre Bearbeitungsfläche 29 den Werkstücken 33, 34 anzunähern. Dabei ist die Anordnung im Ausführungsbeispiel so getroffen, daß zunächst der Zapfen 30 in den Hohlraum des Nietdoms 35 eintritt und die Sonotrode 3 dadurch zentriert, während daran anschließend die Oberkante des Nietdoms 35 mit der konkaven Erwärmungszone 31 in Berührung gelangt. Zu diesem Zeitpunkt oder auch schon vorher wird die Sonotrode 3 in mechanische Schwingungen versetzt, indem dem Leistungsteil 8 (Fig. 1) über die Leitung 24 ein Einschaltsignal zugeführt wird, das z. B. von einem mit der Vorschubeinheit gekoppelten Schalter oder irgendeinem anderen, mit der Bewegung der Vorschubeinheit synchronisierten Organ erzeugt wird. Durch die Anregung der Sonotrode 3 wird das mit ihrer Bearbeitungszone 31 in Berührung befindliche Material des Nietdoms 35 allmählich geschmolzen und bei weiterer Abwärtsbewegung der Sonotrode 3 in der konkaven Vertiefung aufgenommen. Im weiteren Verlauf setzt sich schließlich die Auflagefläche 32 der Sonotrode 3 auf eine ihr zugewandte Oberfläche 36 des oberen Werkstücks 34 auf (Fig. 3). Das in der konkaven Vertiefung aufgenommene Material des Nietdoms 35 wird dadurch zu einem Nietkopf 37 (Fig. 3) verformt, der sich dem an das Loch grenzenden Rand des Werkstück 34 anlegt und dieses dadurch im wesentlichen formschlüssig mit dem Werkstück 33 verbindet. Anschließend wird die Energiezufuhr zum Konverter 2 abgeschaltet und die Sonotrode 3 wieder angehoben, um einen neuen Bearbeitungszyklus zu beginnen.

Die Zufuhr von Ultraschallenergie zur Sonotrode 3 sollte möglichst genau dann unterbrochen werden, wenn sich ihre Auflagefläche 32 auf die Oberfläche 36 des Werkstücks 34 auflegt. Wird die Energiezufuhr zu früh unterbrochen, verbleibt zwischen der Oberfläche 36 und dem Nietkopf 37 ein Luftspalt, der einen nicht ausreichenden Form- bzw. Kraftschluß der Verbindung und außerdem ein unerwünschtes Spiel zwischen den Werkstücken 33, 34 zur Folge hat. Wird die Energiezufuhr zur Sonotrode 3 dagegen zu spät abgeschaltet, kann sich ihre Auflagefläche 32 in die Oberfläche 36 des Werkstücks 34 eingraben und dadurch vor allem optisch unschöne Randzonen erzeugen. Dies ist eine Folge davon, daß versucht wird, die Amplitude der Sonotrodenschwingung, die beim Aufsetzen der Auflagefläche 32 auf die Oberfläche 36 wegen der dadurch entstehenden zusätzlichen Belastung eigentlich reduziert werden sollte, über die Steuer- und Regelschaltung nach Fig. 1 im wesentlichen konstant zu halten, so daß die Auflagefläche 32 in derselben Weise wie zuvor die Erwärmungszone 31 auf den Werkstoff des Werkstücks 34 einwirkt und diesen unkontrolliert zum Schmelzen bringt.

Erfindungsgemäß werden diese Probleme dadurch überwunden, daß das Ausschaltsignal in der Leitung 25 (Fig. 1) im wesentlichen genau dann erzeugt wird, wenn die Auflagefläche 32 der Sonotrode 3 mit der Oberfläche 36 des Werkstücks 34 in Berührung kommt. Hierzu wird von der Erkenntnis ausgegangen, daß sich zu diesem Zeitpunkt wenigstens eine elektrische Zustandsgröße des in Fig. 1 dargestellten Ultraschall-Generators 7 in einer charakteristischen, meßbaren und zur Erzeugung eines Ausschaltsignals verwertbaren Weise verändert.

Als Ausführungsbeispiel ist in Fig. 4 der Verlauf einer Kurve dargestellt, die die Abhängigkeit der in Watt ausgedrückten, dem Konverter 2 zugeführten elektrischen Wirkleistung von der in Sekunden gemessenen Zeit wiedergibt. Es sei angenommen, daß die Energiezufuhr durch ein Einschaltsignal in der Leitung 24 zu einem Zeitpunkt tₒ eingeleitet werde. Die Wirkleistung P steigt dann während einer Einschwingphase, die z. B. ca. 0,5 sec dauert, längs eines Kurvenabschnitts 39 zunächst stark an, um dann zu einem Zeitpunkt t₁ auf einen Kurvenabschnitt 40 abzufallen, der eine im wesentlichen konstante Höhe besitzt. Dieser Kurvenabschnitt 40 ergibt sich dann, wenn die Erwärmungszone 31 der Bearbeitungsfläche 29 der Sonotrode 3 auf den Nietdom 35 einwirkt und diesen zum Schmelzen bringt.

Beim Aufsetzen der Auflagefläche 32 der Sonotrode 3 auf die Oberfläche 36 des Werkstücks 34 (Zeitpunkt t₂ in Fig. 4) steigt die Wirkleistung P längs eines Kurvenabschnitts 41 bis zu einem willkürlich gewählten Zeitpunkt t₃ stark an, zu dem der Generator 7 ausgeschaltet wird. Das ist eine Folge davon, daß die Regelschaltung zu arbeiten beginnt, um eine konstante Schwingungsamplitude aufrechtzuerhalten.

Erfindungsgemäß wird dies zur Erzeugung eines Ausschaltsignals genutzt. Wie Fig. 1 zeigt, werden zu diesem Zweck die Ausgänge 17 und 18, an denen der Wechselstrom I bzw. die Wechelspannung U abgegriffen werden, an zwei Eingänge einer Multiplizierstufe 42 gelegt, in der das Produkt P = U · I gebildet und an einem Ausgang 43 abgegeben wird. Der Ausgang 43 ist einerseits über eine Leitung 44 mit einem Datenspeicher 45, andererseits über eine Leitung 46 mit einem Eingang eines Vergleichers 47 verbunden, der einen zweiten, über eine Leitung 48 mit einem Ausgang des Datenspeichers 45 verbundenen Eingang und einen mit der Leitung 25 verbundenen Ausgang besitzt. Schließlich ist die Leitung 24 über eine Leitung 49 mit einem Eingang einer Zeitsteuerung 50 verbunden, die einen über eine Leitung 51 mit einem weiteren Eingang des Datenspeichers 45 verbundenen Ausgang aufweist. Dadurch ergibt sich erfindungsgemäß die folgende Arbeitsweise:

Während eines Bearbeitungszyklus wird ständig die Leistung P ermittelt. Ihr jeweiliger Istwert wird sowohl dem Datenspeicher 45 als auch dem Vergleicher 47 zugeführt. Gleichzeitig bewirkt die Zeitsteuerung 50 über die Leitung 51, daß eine vorgewählte Zeitspanne ab Erscheinen des Einschaltsignals, z. B. zu einem Zeitpunkt t₄, einerseits der Vergleicher 47 aktiviert wird und andererseits der Datenspeicher 45 den zu diesem Zeitpunkt t₄ vorhandenen Wert der Wirkleistung P fest übernimmt und auf den mit ihm verbundenen Eingang des Vergleichers 47 legt. Im weiteren Verlauf vergleicht der Vergleicher 47 den im Datenspeicher 45 gespeicherten Leistungswert mit dem jeweiligen Istwert, der von der Multiplizierstufe 42 abgegeben wird. Ist dieser Wert um ein vorgewähltes Maß größer als der im Datenspeicher 45 vorhandene Wert, gibt der Vergleicher 47 ein Signal ab, das als Ausschaltsignal in der Leitung 25 erscheint und die Zufuhr von Ultraschall-Energie zum Konverter 2 beendet. Außerdem kann das Ausschaltsignal zum Zurücksetzen der Vorrichtung in den Ausgangszustand und zum Löschen des Datenspeichers 45 verwendet werden.

Die von der Zeitsteuereung 50 vorgegebene, vorzugsweise einstellbare Zeitspanne wird mit t₁ < t₄ < t₂ entsprechend Fig. 4 zweckmäßig so groß gewählt, daß der Datenspeicher 45 einen Wert der Wirkleistung P übernimmt, der sich im Bereich des Kurvenabschnitts 40 ergibt und daher für einen Zeitpunkt zwischen t₁ und t₂ nach Beendigung einer Einschwingzeit charakteristisch ist. Außerdem wird der Vergleicher 47 so eingerichtet, daß er das Ausschaltsignal in der Leitung 25 dann abgibt, wenn der momentane Istwert der Wirkleistung P um ein vorgewähltes Maß größer als der im Datenspeicher 45 gespeicherte Wert ist und z. B. zu einem Zeitpunkt t₅ erhalten wird. Zu diesem Zweck kann der Vergleicher 45 z. B. einen mit seinem Ausgang verbundenen Schwellwertschalter aufweisen. Dadurch wird sichergestellt, daß die Abschaltung der Energiezufuhr eine vorgewählte kurze Zeitspanne nach dem Aufsetzen der Auflagefläche 32 auf die Oberfläche 36 erfolgt und Beschädigungen dieser Oberfläche 36 sicher vermieden werden. Dabei kann der Zeitpunkt t₅ insbesondere dann sehr kurz auf den Zeitpunkt t₂ folgen, wenn der Zeitpunkt t₄ sicher im Kurvenabschnitt 40 liegt. Ohne Anwendung der ZeitSteuerung 50 müßte der Zeitpunkt t₅ dagegen so gewählt werden, daß die dann vorhandene Wirkleistung P größer ist, als sie während des Einschwingvorgangs längs des Kurvenabschnitts 39 werden kann.

Anstatt unter Berücksichtigung des Zustandsgröße "Wirkleistung" kann die Erzeugung der Ausschaltsignale auch unter Berücksichtigung irgendeiner anderen zweckmäßigen elektrischen Zustandsgröße des Generators 7 vorgenommen werden, z. B. unter Berücksichtigung der Frequenz am Ausgang des Leistungsteils 8 oder der Phasenverschiebung zwischen dem Strom am Ausgang 17 und der Spannung am Ausgang 18. Die Bauelemente 42, 45, 47 und 50 müßten dann entsprechend angepaßt werden. Unter dem Begriff "Berücksichtigung der jeweiligen Zustandsgröße" soll dabei verstanden werden, daß die Ausschaltsignale in Abhängigkeit davon erzeugt werden, welche Änderung die Zustandsgröße nach dem Aufsetzen der Auflagefläche 32 auf das Werkstück 34 im Vergleich zum vorher stattfindenden Bearbeitungsvorgang während einer normalen bzw. als brauchbar erkannten Bearbeitungsdauer erfährt, die z. B. durch das Zeitintervall zwischen t₀ und t₂ in Fig. 4 definiert ist.

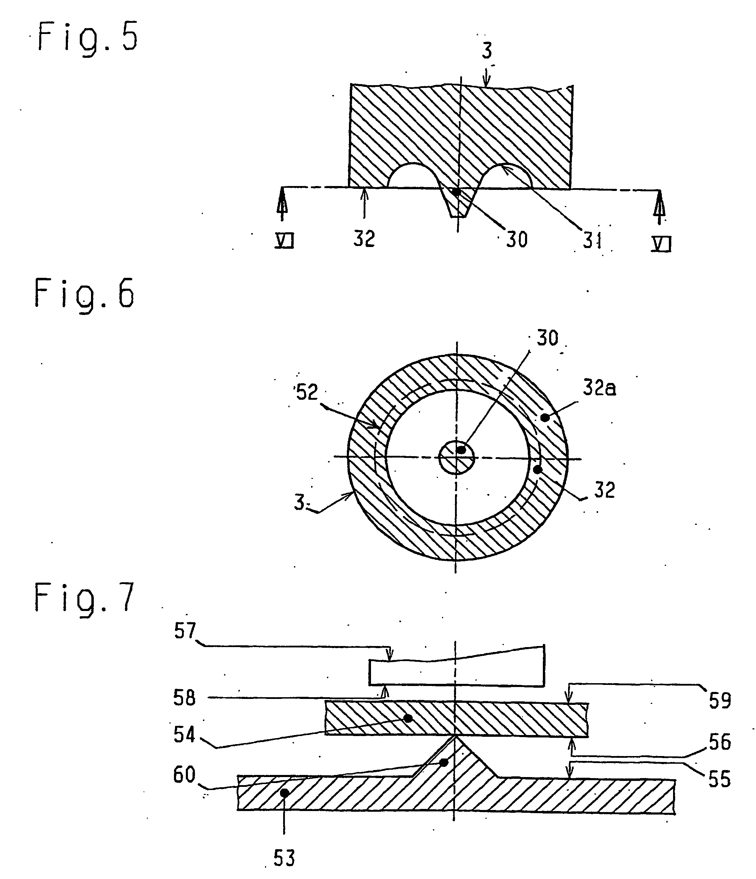

Erfindungsgemäß wird weiter vorgeschlagen, die Auflagefläche 32 entsprechend Fig. 5 und 6 möglichst groß auszubilden. Hierdurch wird erreicht, daß die betrachtete Zustandsgröße, hier die Wirkleistung P, beim Aufsetzen der Sonotrode 3 auf das Werkstück 34 entsprechend vergrößert wird. Dies ist in Fig. 4 durch einen gestrichelt dargestellten Kurvenabschnitt 41a angedeutet, der bei Anwendung einer Sonotrode 3 nach Fig. 5 und 6 erhalten wurde, die bei sonst gleichen Abmessungen eine größere Auflagefläche 32a als eine Sonotrode 3 besitzt, die zum Kurvenabschnitt 41 führt, in Fig. 6 mit einer gestrichelten Linie 52 umrandet ist und sich zur Durchführung des gewünschten Bearbeitungsvorgangs als gerade ausreichend erwiesen hat.

Die Erfindung kann mit Erfolg auch bei anderen als anhand der Fig. 2 und 3 erläuterten Bearbeitungen angewendet werden. Dies ist z. B. in Fig. 7 anhand einer Flächenschweißung angedeutet, durch die zwei Werkstücke 53 und 54 längs einander gegenüberliegender Verbindungsflächen 55, 56 und unter Anwendung einer Sonotrode 57 miteinander verbunden werden sollen, die mit einer Bearbeitungsfläche 58 auf eine ihr zugewandte Oberfläche 59 z. B. des Werkstücks 54 aufgelegt wird, wobei diese Oberfläche 59 auf der im Vergleich zur Verbindungsfläche 56 entgegengesetzten Seite des Werkstücks 54 angeordnet und z. B. durchgehend eben ausgebildet ist. Bei derartigen Schweißverfahren ist in der Regel eine der Verbindungsflächen, hier die Verbindungsfläche 55, mit einem keilförmig aufragenden, sogenannten Energierichtungsgeber 60 versehen, der aus einem thermoplastischen Material besteht. Abweichend von Figuren 2 und 3 sollte das Werkstück 54 hier aus einem vergleichsweise harten Material bestehen, damit die mechanischen Schwingungen der Sonotrode 57 nicht zu einem Schmelzen seiner Oberfläche 59 führen, sondern ein Schwingen des gesamten Werkstücks 54 mit der Folge bewirken, daß der Energierichtungsgeber 60 schmilzt und dadurch beim Absenken der Sonotrode 57 die beiden Werkstücke 53, 54 miteinander verschweißt. Bei einer solchen Bearbeitung nimmt analog zu Fig. 4 wenigstens eine elektrische Zustandsgröße des verwendeten Ultraschall-Generators in dem Moment, wo die beiden Verbindungsflächen 55, 56 aneinander liegen, stark zu oder ab, so daß dies zur Erzeugung eines Abschaltsignals ausgenutzt werden kann. In diesem Fall hat ein rechtzeitiges Abschalten der Energiezufuhr die Folge, daß sich die Sonotrode 57 nicht in die Oberfläche 59 des Werkstücks 54 eingraben kann.

Die Erfindung ist nicht auf die beschriebenen Ausführungsbeispiele beschränkt, die auf vielfache Weise abgewandelt werden können. Insbesondere ist es möglich, den Verlauf der zur Erzeugung der Ausschaltsignale verwendeten Zustandsgröße in anderer Weise zu berücksichtigen, als oben anhand der Fig. 4 erläutert wurde. Beispielsweise könnte anstatt des dem Kurvenabschnitt 40 entsprechenden Absolutwerts der Zustandsgröße ein ab dem Zeitpunkt t₀ oder t₁ gemessener Mittelwert verwendet und ein Ausschaltsignal erzeugt werden, wenn sich der Mittelwert gegenüber dem normalen Bearbeitungszyklus merklich verändert oder wenn der Istwert der Zustandsgröße wesentlich vom Mittelwert abweicht. Außerdem ist es möglich, den Wert t₅ in Fig. 4 so zu wählen, daß die Energiezufuhr nach dem Auftreffen der Sonotrode 3 auf das Werkstück 34 oder des Werkstücks 54 auf das Werkstück 53 noch eine vorgewählte Zeitlang eingeschaltet bleibt, wenn sich dies zur Erzielung eines guten Bearbeitungsergebnisses als sinnvoll erwiesen hat. Außerdem kann vorgesehen sein, daß die Abschaltung der Energiezufuhr erst dann erfolgt, wenn der Wert der Zustandsgröße größer als irgendein Wert ist, der innerhalb einer als brauchbar erkannten Bearbeitungsdauer auftreten kann. Weiter sind die anhand der Figuren 2, 4 und 7 beschriebenen Bearbeitungen und die zugehörigen Sonotrodenformen nur als Beispiele zu verstehen. Außerdem ist klar, daß die beschriebene Vorrichtung eine Vielzahl von Sonotroden, die in einem gemeinsamen Arbeitsgang auf eine entsprechende Vielzahl von Bearbeitungsstellen abgesenkt werden, und eine entsprechende Anzahl von diesen einzeln zugeordneten Schaltkreisen 42 bis 51 aufweisen kann. Außerdem kann die Erfindung analog auch beim Punktschweißen angewendet werden, in welchem Fall die vorgewählte Auflagefläche 32 der Sonotrode im Verhältnis wesentlich größer sein und praktisch aus der ganzen Sonotrodenunterseite bestehen kann. Auch der Generator 7 und der aus den Elementen 42 bis 51 gebildete Schaltkreis können anders als dargestellt aufgebaut sein. Schließlich versteht sich, daß die verschiedenen Merkmale auch in anderen als den dargestellten und beschriebenen Kombinationen angewendet werden könnten.

## Patentansprüche

1. Verfahren zur Ultraschallbearbeitung von Werkstücken (33, 34; 53, 54) mit einem eine Sonotrode (3, 57) und einen Konverter (2) aufweisenden Schwinggebilde (1), wobei die Sonotrode (3, 57) zur Durchführung von Bearbeitungszyklen den Werkstücken (33, 34; 53, 54) angenähert und dabei so gegen einer der Werkstücke (33, 34; 53, 54) gedrückt wird, daß beide Werkstücke (33, 34; 53, 54) durch lokales Aufschmelzen vorgewählter Bereiche (35, 60) fest miteinander verbunden werden, und wobei dem Konverter (2) mittels eines Ultraschall-Generators (7), der durch elektrische Einschalt- und Ausschaltsignale ein- bzw. ausgeschaltet wird, nur während der Dauer der Bearbeitungszyklen Ultraschallenergie zugeführt wird, **dadurch gekennzeichnet, daß** die Bearbeitung so durchgeführt wird daß die Bearbeitungszyklen im wesentlichen genau dann beendet werden, wenn eine ausgewählte Auflagefäche (32) de Sonotrode (3) und eine ihr zugewandte Werkstückoberfläche (36) oder zwei einander gegenüberliegende Verbindungensflächen (55, 56) der Werkstücke (53, 54) in gegenseitige Berührung kommen, indem die Ausschaltsignale unter Berücksichtigung wenigstens einer elektrischen Zustandsgröße (P) des Generators (7) erzeugt werden, die bei der gegenseitigen Berührung der Flächen (32, 36; 55, 56) eine die Berührung anzeigende, charakteristische Änderung erfährt.

2. Verfahren nach Anspruch 1, **dadurch gekennzeichnet, daß** als elektrische Zustandsgröße die Frequenz des im Generator (7) fließenden Stroms, die Phasenverschiebung zwischen dem Strom und der Spannung im Generator (7) und/oder die vom Generator (7) erzeugte elektrische Ultraschall-Leistung (P) verwendet wird.

3. Vorrichtung zur Ultraschallbearbeitung von Werkstücken (33, 34; 53, 54) enthaltend: ein Schwinggebilde (1) mit einer Sonotrode (3, 57) und einem elektromechanischen Konverter (2), einen an den Konverter (2) angeschlossenen, zur Zufuhr von Ultraschallenergie bestimmten Generator (7), eine Vorschubeinheit zur Bewegung der Sonotrode (3, 57) während Bearbeitungszyklen in Richtung der Werkstücke (33, 34; 53, 54) bis zum gegenseitigen Inberührungbringen einer ausgewählten Auflagefläche (32) der Sonotrode (3) und einer ihr zugewandten Werkstückoberfläche (36) oder von zwei einander gegenüberliegenden Verbindungsflächen (55, 56) der Werkstücke (53, 54), Mittel (24, 25) zur Erzeugung von Ein- bzw. Ausschaltsignalen für den Generator (7) jeweils am Anfang und am Ende der Bearbeitungszyklen, kenngezeichnet durch wenigstens einen Ausgang (17, 18 bzw. 43) zur Abgabe einer ausgewählten elektrischen Zustandsgröße (P) des Generators (7), wobei die elektrische Zustandsgröße eine sich bei der gegenseitigen Berührung der Flächen (32, 36; 55, 56) ändernde Zustandsgröße ist und die Ausschaltsignale dann erzeugbar sind, wenn die elektrische Zustandsgröße eine vorgewählte Änderung erfahren hat.

4. Vorrichtung nach Anspruch 3, **dadurch gekennzeichnet, daß** die elektrische Zustandsgröße die Frequenz des im Generator (7) fließenden Stroms, die Phasenverschiebung zwischen dem Strom und der Spannung im Generator (7) und/oder die vom Generator (7) erzeugte Wirkleistung (P) ist.

5. Vorrichtung nach Anspruch 3 oder 4, **dadurch gekennzeichnet, daß** der Ausgang (17, 18 bzw. 43) zur Abgabe der elektrischen Zustandsgröße (P) mit einem zur Abgabe der Ausschaltsignale bestimmten Schaltkreis (44 bis 51) verbunden ist, der die Ausschaltsignale immer dann abgibt, wenn die elektrische Zustandsgröße (P) um einen vorgewählten Betrag von Werten abweicht, die sie während einer als brauchbar erkannten Bearbeitungsdauer annehmen kann.

6. Vorrichtung nach Anspruch 5, **dadurch gekennzeichnet, daß** die Ausschaltsignale erzeugbar sind, wenn die elektrische Zustandsgröße (P) um einen vorgewählten Betrag von einem Mittelwert abweicht, der sich während einer als brauchbar erkannten Bearbeitungsdauer zwischen vorgewählten Zeitpunkten ergibt.

7. Vorrichtung nach Anspruch 5 oder 6, **dadurch gekennzeichnet, daß** der Schaltkreis (44 bis 51) jeweils erst eine vorgewählte Zeitlang (t₄) nach Erscheinen der Einschaltsignale (t₀) aktivierbar ist.

8. Vorrichtung nach einem der Ansprüche 3 bis 7, **dadurch gekennzeichnet, daß** die Ausschaltsignale beim Punkt-, Niet- oder Zapfenschweißen zu Zeitpunkten (t₅) erzeugbar sind, die dem Aufsetzen der vorgewählten Auflagefläche (32) der Sonotrode (3) auf die ihr zugewandte Oberfläche (36) eines zugeordneten Werkstücks (34) entsprechen.

9. Vorrichtung nach einem der Ansprüche 3 bis 7, **dadurch gekennzeichnet, daß** die Ausschaltsignale beim Flächenschweißen mit Energierichtungsgebern (60) zu Zeitpunkten erzeugbar sind, die dem flächigen Inberührungbringen der Geiden Verbindungsflächen (55, 56) entsprechen.

10. Vorrichtung nach Anspruch 8, **dadurch gekennzeichnet, daß** die Auflagefläche (32a) der Sonotrode (3) größer gewählt wird, als zur Durchführung der Bearbeitung mindestens erforderlich ist.

## Claims

1. Process for the ultrasonic processing of workpieces (33, 34; 53, 54) with an oscillatory system (1) having a sonotrode (3, 57) and a converter (2), wherein the sonotrode (3, 57) is brought close to the workpieces (33, 34; 53, 54) to perform processing cycles and therein is pressed against one of the workpieces (33, 34; 53, 54) such that both workpieces (33, 34; 53, 54) are firmly connected to one another by local melting of preselected regions (35, 60), and wherein ultrasonic energy is fed to the converter (2) by means of an ultrasonic generator (7), which is switched on or off through electrical switch-on and switch-off signals, only for the duration of the processing cycles, **characterised in that** the processing is performed so that the processing cycles are ended essentially exactly when a selected support face (32) of the sonotrode (3) and a workpiece surface (36) facing it or two opposing connecting faces (55, 56) of the workpieces (53, 54) come into mutual contact **in that** the switch-off signals are generated in dependence on at least one electrical variable (P) of the generator (7), which on mutual contact of the faces (32, 36; 55, 56) undergoes a characteristic change indicating the contact.

2. Process according to Claim 1, **characterised in that** the frequency of the current flowing in the generator (7), the phase shift between the current and the voltage of the generator (7) and/or the electrical ultrasonic power (P) generated by the generator (7) is used as electrical variable.

3. Device for the ultrasonic processing of workpieces (33, 34; 53, 54) comprising: an oscillatory system (1) with a sonotrode (3, 57) and an electromechanical converter (2), a generator (7) connected to the converter (2) intended for the supply of ultrasonic energy, a feed unit for movement of the sonotrode (3, 57) during processing cycles in the direction of the workpieces (33, 34; 53, 54) until a selected support face (32) of the sonotrode (3) and a workpiece surface (36) facing it or two opposing connecting faces (55, 56) of the workpieces (53, 54) are brought into mutual contact, means (24, 25) for generating switch-on or switch-off signals for the generator (7) respectively at the beginning and at the end of the processing cycles, **characterised by** at least one output (17, 18 or 43) for the delivery of a selected electrical variable (P) of the generator (7), wherein the electrical variable is a variable that changes on mutual contact of the faces (32, 36; 55, 56), and the switch-off signals can be generated when the electrical variable has undergone a preselected change.

4. Device according to Claim 3, **characterised in that** the electrical variable is the frequency of the current flowing in the generator (7), the phase shift between the current and the voltage of the generator (7) and/or the effective power (P) generated by the generator (7).

5. Device according to Claim 3 or 4, **characterised in that** for the delivery of the electrical variable (P) the output (17, 18 or 43) is connected to a circuit (44 to 51) intended for delivery of the switch-off signals, which always delivers the switch-off signals when the electrical variable (P) deviates by a preselected amount from values, which it can assume for a processing duration recognised as usable.

6. Device according to Claim 5, **characterised in that** the switch-off signals can be generated when the electrical variable (P) deviates by a preselected amount from a mean value, which results during a processing duration between preselected points in time recognised as usable.

7. Device according to Claim 5 or 6, **characterised in that** the circuit (44 to 51) can be respectively activated only for a preselected time period (t₄) after appearance of the switch-on signals (t₀).

8. Device according to one of Claims 3 to 7, **characterised in that** during spot, rivet or stud welding the switch-off signals can be generated at points in time (t₅), which correspond to the preselected support face of the sonotrode (3) being placed onto the surface (36) of an associated workpiece (34) facing it.

9. Device according to one of Claims 3 to 7, **characterised in that** during surface welding with energy direction indicators (60) the switch-off signals can be generated at points in time, which correspond to the two connecting faces (55, 56) being brought into surface contact.

10. Device according to Claim 8, **characterised in that** the support face (32a) of the sonotrode (3) is selected to be larger than is at least necessary to perform the processing.

## Revendications

1. Procédé d'usinage par ultrasons de pièces (33, 34 ; 53, 54) avec une structure vibrante (1) présentant une sonotrode (3, 57) et un convertisseur (2), dans lequel, pour l'exécution de cycles d'usinage, la sonotrode (3, 57) est approchée des pièces (33, 34 ; 53, 54) et à cette occasion pressée contre une des pièces (33, 34 ; 53, 54) de telle manière que les deux pièces (33, 34 ; 53, 54) soient rigidement reliées ensemble par fusion locale de zones présélectionnées (35, 60) et dans lequel on ne fournit de l'énergie ultrasonore au convertisseur (2), au moyen d'un générateur d'ultrasons (7) qui est activé et désactivé par des signaux d'activation et de désactivation électriques, que pendant la durée des cycles d'usinage, **caractérisé par le fait que** l'usinage est réalisé de telle manière que les cycles d'usinage se terminent sensiblement exactement quand une surface d'appui (32) sélectionnée de la sonotrode (3) et une surface de pièce (36) tournée vers elle ou deux surfaces d'assemblage (55, 56) se faisant face des pièces (53, 54) entrent en contact mutuel, les signaux de désactivation étant générés en tenant compte d'au moins une grandeur d'état électrique (P) du générateur (7) qui subit un changement caractéristique, indiquant le contact, lors du contact mutuel des surfaces (32, 36 ; 55, 56).

2. Procédé selon la revendication 1, **caractérisé par le fait que** l'on utilise comme grandeur d'état électrique la fréquence du courant circulant dans le générateur (7), le déphasage entre le courant et la tension dans le générateur (7) et/ou la puissance ultrasonore électrique (P) générée par le générateur (7).

3. Dispositif pour l'usinage par ultrasons de pièces (33, 34 ; 53, 54) comprenant :
une structure vibrante (1) avec une sonotrode (3, 57) et un convertisseur électromécanique (2), un générateur (7) relié au convertisseur (2), destiné à l'amenée d'énergie ultrasonore, une unité d'avance pour déplacer la sonotrode (3, 57) pendant des cycles d'usinage en direction des pièces (33, 34 ; 53, 54) jusqu'à la mise en contact mutuel d'une surface d'appui (32) sélectionnée de la sonotrode (3) et d'une surface de pièce (36) tournée vers elle ou deux surfaces d'assemblage (55, 56) se faisant face des pièces (53, 54), des moyens (24, 25) pour générer des signaux d'activation et de désactivation pour le générateur (7) respectivement au début et à la fin des cycles d'usinage, **caractérisé par** au moins une sortie (17, 18 ou 43) prévue pour délivrer une grandeur d'état électrique (P) sélectionnée du générateur (7), la grandeur d'état électrique étant une grandeur d'état qui change lors du contact mutuel des surfaces (32, 36 ; 55, 56) et les signaux de désactivation pouvant être générés lorsque la grandeur d'état électrique a subi un changement présélectionné.

4. Dispositif selon la revendication 3, **caractérisé par le fait que** la grandeur d'état électrique est la fréquence du courant circulant dans le générateur (7), le déphasage entre le courant et la tension dans le générateur (7) et/ou la puissance active (P) générée par le générateur (7).

5. Dispositif selon la revendication 3 ou 4, **caractérisé par le fait que** la sortie (17, 18 ou 43) prévue pour délivrer la grandeur d'état électrique (P) est reliée à un circuit (44 à 51) destiné à délivrer les signaux de désactivation, qui délivre toujours les signaux de désactivation lorsque la grandeur d'état électrique (P) diffère d'un montant présélectionné de valeurs qu'elle peut prendre pendant une durée d'usinage reconnue comme utile.

6. Dispositif selon la revendication 5, **caractérisé par le fait que** les signaux de désactivation peuvent être générés lorsque la grandeur d'état électrique (P) diffère d'un montant présélectionné d'une valeur moyenne que l'on obtient entre des instants présélectionnés pendant une durée d'usinage reconnue comme utile.

7. Dispositif selon la revendication 5 ou 6, **caractérisé par le fait que** le circuit (44 à 51) ne peut être activé chaque fois qu'un certain temps (t₄) présélectionné après apparition des signaux d'activation (t₀).

8. Dispositif selon l'une des revendications 3 à 7, **caractérisé par le fait que** lors du soudage par points, de rivets ou de goujons, les signaux de désactivation peuvent être générés à des instants (t₅) qui correspondent à la pose de la surface d'appui (32) présélectionnée de la sonotrode (3) sur la surface (36) tournée vers elle d'une pièce (34) associée.

9. Dispositif selon l'une des revendications 3 à 7, **caractérisé par le fait que** lors du soudage plan avec des directeurs d'énergie (60), les signaux de désactivation peuvent être générés à des instants qui correspondent à la mise en contact plan des deux surfaces d'assemblage (55, 56).

10. Dispositif selon la revendication 8, **caractérisé par le fait que** la surface d'appui (32a) de la sonotrode (3) est choisie plus grande que nécessaire au minimum pour la réalisation de l'usinage.
